# EUROPÄISCHE PATENTSCHRIFT

(11) **EP 4 269 817 B1**
(45) Veröffentlichungstag und Bekanntmachung des Hinweises auf die Patenterteilung: **26.03.2025**
(21) Anmeldenummer: 23150227.9
(22) Anmeldetag: 04.01.2023
(51) Int. Cl.: F16B 31/02, F16B 13/08

(54) **BEFESTIGUNGSSYSTEM, VERFAHREN ZUM BEFESTIGEN EINES BEFESTIGUNGSMITTELS SOWIE BEFESTIGUNGSMITTEL**
FASTENING SYSTEM, METHOD FOR FASTENING A FASTENING MEANS AND FASTENING MEANS
SYSTÈME DE FIXATION, PROCÉDÉ DE FIXATION D'UN MOYEN DE FIXATION ET MOYEN DE FIXATION

(30) Priorität: 02.02.2022 DE 102022102385
(43) Veröffentlichungstag der Anmeldung: 01.11.2023
(73) Patentinhaber: fischerwerke GmbH & Co. KG, 72178 Waldachtal (DE)
(72) Erfinder: Becker, Janina, 72250 Freudenstadt (DE); Freudigmann, Lars, 72072 Tübingen (DE); Suchy, Ulrich, 72250 Freudenstadt (DE); Lehmann, David, 72275 Alpirsbach (DE); Salzer, Benedikt, 75365 Calw-Alzenberg (DE)
(74) Vertreter: Suchy, Ulrich Johannes

(56) Entgegenhaltungen:
- EP-A1- 0 943 817
- EP-A2- 1 176 322
- WO-A1-2013/113586
- WO-A1-2018/103805
- DE-A1- 2 418 598

## Beschreibung

Die Erfindung betrifft ein Verfahren zum planmäßigen Befestigen eines Befestigungsmittels mit den Merkmalen des Oberbegriffs des Anspruchs 1.

Ein gattungsgemäßes Befestigungssystem ist aus der internationalen Patentanmeldung WO 2013/113586 A1 bekannt. Beschrieben ist ein Hinterschnittanker, der aus einem Konusbolzen und einer Spreizhülse besteht. Zum Befestigen des Hinterschnittankers in einem Bohrloch wird die Spreizhülse auf den Konusbolzen aufgeschoben, wodurch ein vorderer Teil der Spreizhülse aufgespreizt wird. Am Konusbolzen ist eine umlaufende Nut als Setztiefenmarkierung angeordnet, die in einem planmäßigen Befestigungszustand, wenn die Spreizhülse weit genug auf den Konusbolzen aufgeschoben worden ist, sichtbar ist und von einer Kamera erfasst werden kann. Auf der hinteren Stirnseite des Konusbolzens ist zudem ein Code zur Identifizierung des Hinterschnittankers angeordnet, der ebenfalls mit der Kamera ausgelesen werden kann. Durch das Auslesen des Codes kann die genaue Bezeichnung des Hinterschnittankers erfasst und die ebenfalls mit der Kamera erfasste Endlage des Hinterschnittankers dokumentiert werden, wodurch nachweisbar ist, dass dieser Hinterschnittanker planmäßig befestigt wurde.

Aufgabe der Erfindung ist, das bekannte Befestigungssystem und das Verfahren zum Befestigen eines Befestigungsmittels weiter zu verbessern.

Diese Aufgabe wird erfindungsgemäß durch ein Verfahren mit den Merkmalen des Anspruchs 1 gelöst.

Das entsprechende Befestigungssystem dient zum planmäßigen Befestigen eines Befestigungsmittels, das Teil des Befestigungssystems ist. Ein Befestigungsmittel im Sinne der Erfindung ist ein Anker, beispielsweise ein Hinterschnittanker, wie er aus dem eingangs beschriebenen Stand der Technik bekannt ist oder ein Bolzen- oder Hülsenanker, wie er ebenfalls handelsüblich ist. Das erfindungsgemäße Verfahren richtet sich an die Befestigung eines Ankers in einem Bohrloch, insbesondere in einem Bohrloch in einem mineralischen Baustoff, insbesondere in Beton. Zum Befestigen ist das Befestigungsmittel von einem Ausgangszustand, in dem das Befestigungsmittel beispielsweise an den Verwender ausgeliefert wird, in einen planmäßigen Befestigungszustand überführbar, in dem das Befestigungsmittel planmäßig, also so, wie dies zur sicheren Aufnahme von einwirkenden Kräften vorgesehen ist, im oder am Befestigungsgrund befestigt ist. Der Befestigungsgrund kann beispielsweise eine Wand aus Beton sein, in der ein Bohrloch zur Aufnahme eines beispielsweise als Hinterschnittanker ausgebildeten Befestigungsmittels gebohrt wurde.

Außer dem Befestigungsmittel umfasst das Befestigungssystem einen vom Befestigungsmittel separaten Sensor, insbesondere einen optoelektronischen Sensor, insbesondere eine Kamera, insbesondere eine Kamera eines Smartphones oder eines entsprechenden mobilen Geräts, wie beispielsweise eines Tablet-PCs.

Das Befestigungssystem umfasst zudem mindestens ein Markiermittel und mindestens ein maschinenlesbares Informationselement, die vorzugsweise beide am Befestigungsmittel angeordnet sind. Möglich ist aber auch eine Anordnung beispielsweise des Markiermittels am Befestigungsmittel und des Informationselements an einem zum Befestigungssystem zugehörigen Anbauteil, das mit dem Befestigungsmittel am Befestigungsgrund befestigbar ist. Das Markiermittel ist vorzugsweise ein Kontrollmittel zur Qualitätsprüfung der planmäßigen Befestigung des Befestigungsmittels. Das Markiermittel wird im Sinne dieser Erfindung erst im Zustand der planmäßigen Befestigung zum Markiermittel. Beispielsweise handelt es sich bei dem Markiermittel um eine Setztiefenmarkierung eines Hinterschnittankers, wie er aus dem eingangs beschriebenen Stand der Technik bekannt ist, bei dem die Setztiefenmarkierung als Qualitätsmerkmal anzeigt, dass die Spreizhülse planmäßig am Konusbolzen verschoben wurde. Erst in diesem Zustand ist das Markiermittel sichtbar. Denkbar ist aber auch eine Markierung, die bereits im Ausgangszustand sichtbar ist, jedoch erst durch eine Veränderung, beispielsweise ein Farbumschlag oder das Erreichen einer bestimmten Position, zum Markiermittel im Sinne dieser Erfindung wird. "Maschinenlesbar" meint hier vorzugsweise, dass das Informationselement mittels eines optoelektronischen Sensors, insbesondere einer Kamera eines Smartphones oder eines entsprechenden mobilen Geräts, ausgelesen werden kann. Das Informationselement umfasst hierfür vorzugsweise einen eindimensionalen, zweidimensionalen oder dreidimensionalen Code, insbesondere einen DataMatrix-Code (DM-Code) oder einen Quick-Response-Code (QR-Code), oder das Informationselement ist als eindimensionaler, zweidimensionaler oder dreidimensionaler Code ausgestaltet. Allgemein gesprochen kann das Informationselement auch ein alphanumerischer Code oder ein elektronisches Element, beispielsweise ein RFID-Element, sein, das mittels des Sensors auslesbar ist. Der Code kann beispielsweise aufgedruckt, geprägt oder mittels Lasergravur aufgebracht werden, wobei die Art der Aufbringung nicht wesentlich für die Erfindung ist.

Erfindungsgemäß sind das Markiermittel und das Informationselement derart angeordnet, dass sie im Befestigungszustand, aber nicht vor und/oder während der Montage, gemeinsam mit dem Sensor zum Nachweis der planmäßigen Befestigung erfassbar sind. Insbesondere sind das Markiermittel und das Informationselement derart angeordnet, dass sie nur im planmäßigen Befestigungszustand gemeinsam mit dem Sensor zum Nachweis der planmäßigen Befestigung erfassbar sind. Das heißt, nur dann, wenn beispielsweise eine Schraube wie vorgesehen angezogen oder ein Anker oder Dübel wie vorgesehen gesetzt ist und die zu erwartenden Belastungen sicher aufnehmen kann, können das Markiermittel und das Informationselement gemeinsam, das heißt zusammen und zeitgleich, mit dem Sensor erfasst werden. Im Montagezustand sind das Markiermittel und das Informationselement derart angeordnet, dass beim vollständigen Erfassen des Markiermittels das Informationselement verdeckt oder zumindest nicht vollständig erfassbar ist oder, dass beim vollständigen Erfassen des Informationselements das Markiermittel verdeckt oder zumindest nicht vollständig erfassbar ist. Ist das Befestigungsmittel beispielsweise ein Hinterschnittanker, wie er aus dem eingangs beschriebenen Stand der Technik bekannt ist, so verdeckt beispielsweise die Hülse das Informationselement im Ausgangszustand und gibt es erst im planmäßigen Befestigungszustand soweit frei, dass es ausgelesen und gemeinsam mit dem Markiermittel erfasst werden kann.

Das erfindungsgemäße Verfahren hat den Vorteil, dass nur im planmäßigen Befestigungszustand ein gemeinsames Erfassen des Markiermittels und des Informationselements und somit eine Dokumentation des planmäßigen Befestigens in nur einem, beispielsweise vom Sensor aufgenommenen, Bild stattfindet bzw. möglich ist. Befindet sich das Befestigungssystem nicht im planmäßigen Befestigungszustand, so ist das gemeinsame Erfassen und eine Dokumentation in nur einem Bild nicht möglich.

Bei einer bevorzugten Ausgestaltungsform des erfindungsgemäßen Verfahren sind das Informationselement und das Markiermittel identisch als nur ein Element ausgebildet. In diesem Fall kann beispielsweise das als DM-Code ausgebildete Informationselement an einem Hinterschnittanker die Funktion der Setztiefenmarkierung übernehmen, wobei der DM-Code erst dann erfasst und ausgelesen werden kann, wenn die Spreizhülse im vorgesehenen Maß planmäßig auf den Spreizkonus des Konusbolzens aufgeschoben worden ist. Im Ausgangszustand verdeckt die Spreizhülse den Code vollständig oder zumindest so sehr, dass ein Auslesen nicht möglich ist.

Vorzugsweise ist das Informationselement oder das Markiermittel bereits im Montagezustand mit dem Sensor erfassbar, was einschließt, dass das Informationselement und das Markiermittel beide, aber nicht gemeinsam, also nicht zeitgleich zusammen, mit dem Sensor, insbesondere in einem mit einer Kamera aufgenommenen Bild, im Montagezustand erfassbar sind. Dies hat den Vorteil, dass beispielsweise das Informationselement schon im Ausgangszustand ausgelesen werden kann. Ein Verwender hat beispielsweise durch das Auslesen des Informationselements Zugang auf eine Homepage, in der für das entsprechende Befestigungsmittel weiterführende Informationen, wie beispielsweise eine Montageanleitung und/oder ähnliche Informationen hinterlegt sind, die der Verwender zur planmäßigen Montage benötigt.

Bei einer bevorzugten Ausgestaltungsform des erfindungsgemäßen Verfahrens weist das Befestigungsmittel ein Abdeckelement auf, das derart gestaltet ist, dass es vor und/oder während der Montage, insbesondere im Ausgangszustand, zumindest das Informationselement oder das Markiermittel derart abdeckt, dass das Informationselement und das Markiermittel nicht gemeinsam erfassbar sind. Beim Erreichen des Endzustands gibt das Abdeckelement die Markiermittel und/oder das Informationselement zum gemeinsamen Erfassen mittels des Sensors frei, insbesondere durch Verschieben, Verformen oder Abreißen des Abdeckelements während der Montage. Das Abdeckelement kann beispielsweise bei einem Hinterschnittanker die Spreizhülse oder bei einer Schraube ein Abreißkopf sein, der beim Erreichen eines definierten Drehmoments beim Anziehen der Schraube an einer Solltrennstelle vom Schraubenkopf abreißt und dadurch das Informationselement und/oder das Markiermittel zum gemeinsamen Auffassen des Informationselements des Markiermittels freigibt.

Vorzugsweise umfasst das Befestigungssystem ein Abreißelement, das aus zwei Teilen besteht, die mittels einer Solltrennstelle verbunden sind, wie dies beispielsweise von einer Abreißmutter oder einer Abreißschraube bekannt ist. Bei diesen Elementen ist beispielsweise eine herkömmliche Mutter oder Schraube als Grundkörper mit einem Abreißkopf als Abreißelement einstückig über eine Solltrennstelle verbunden. Das Abreißelement weist ein Drehangriffsmittel für ein Schraubwerkzeug auf, beispielsweise ein Außensechskant. Mit dem Schraubwerkzeug wird die Abreißschraube beziehungsweise die Abreißmutter planmäßig verschraubt, bis beim Erreichen des planmäßigen Anzugdrehmoments das Abreißelement vom Grundkörper der Mutter beziehungsweise der Schraube abreißt, so dass der Montagevorgang beendet ist. Das Informationselement und das Markiermittel sind bei dieser Ausgestaltungsform gemeinsam an einem der beiden Teile angeordnet, insbesondere am Grundkörper. Insbesondere sind das Informationselement und das Markiermittel an sich bezüglich einer Achse eines Gewindes gegenüberliegenden Stellen angeordnet. Bei einer Mutter ist die Achse die Achse des Muttergewindes und bei einer Schraube die des Schraubgewindes. Bei dieser Ausgestaltungsform des erfindungsgemäßen Befestigungssystems kann die Solltrennstelle nach der Trennung der beiden Teile der Abreißmutter als Markiermittel dienen, die nach der Trennung gemeinsam mit dem an einem der Teile angeordneten Informationselement mit dem Sensor erfasst werden kann.

Bei einer weiteren bevorzugten Ausgestaltungsform des erfindungsgemäßen Verfahrens umfasst das Befestigungssystem einen Spreizanker mit einem Ankerbolzens und einer Hülse. Die Hülse umgreift den Ankerbolzen in Umfangsrichtung, insbesondere vollständig. Die Hülse ist insbesondere an einem Ende aufspreizbar. Zumindest das Informationselement oder das Markiermittel, insbesondere beide, sind am Ankerbolzens angeordnet. Insbesondere ist das Informationselement auf einer Stirnfläche des Ankerbolzens angeordnet, insbesondere auf der Stirnfläche, die im planmäßigen Befestigungszustand aus dem Bohrloch hervorsteht, in dem der Spreizanker befestigt ist.

Bei dieser Ausgestaltungsform des Befestigungssystems ist das Markiermittel vorzugsweise an einem Montagewerkzeug angeordnet, mit dem das Befestigungsmittel planmäßig montierbar ist. Beispielsweise kann das Markiermittel am Montagewerkzeug anzeigen, wenn eine Hülse eines Spreizankers um einen vorbestimmten Weg entlang des Ankerbolzen verschoben worden ist.

Bei einem Befestigungsmittel, insbesondere einem Hinterschnittanker, wie er aus dem eingangs beschriebenen Stand der Technik bekannt ist, sowie bei einer weiteren bevorzugten Ausgestaltungsform des Befestigungssystems umfasst das Markiermittel mindestens ein alphanumerisches Zeichen. Vorzugsweise ist das Markiermittel ein mehrstelliger, alphanumerischer Code, insbesondere eine Prüfziffer. Das Markiermittel kann somit ebenfalls vom Sensor ausgelesen werden. Das Markiermittel ist in diesem Fall insbesondere derart angeordnet, dass es erst im planmäßigen Befestigungszustand erfasst und ausgelesen werden kann, sodass eindeutig der Nachweis erbracht ist, dass sich das Befestigungsmittel im planmäßigen Befestigungszustand befindet. In diesem Fall kann das Markiermittel auch als Informationselement dienen.

Weiterhin ist bevorzugt, dass das Informationselement eineindeutig für das Befestigungsmittel ist. Das heißt, dass bei einem Satz von Befestigungssystemen, der zumindest einen Sensor und mehrere Befestigungsmittel umfasst, jedes Befestigungsmittel ein Informationselement aufweist, das sich von den Informationselementen der anderen Befestigungsmittel des Satzes unterscheidet. Somit erhält jedes der Befestigungsmittel des Satzes durch das jeweils eineindeutige Informationselement seinen eigenen, eineindeutigen Namen. Dies hat den Vorteil, dass auf einer Baustelle, auf der mehrere gleiche Befestigungsmittel desselben Typs verwendet werden, für jedes Befestigungsmittel mit dem Sensor eine eineindeutige Dokumentation, dass der planmäßige Befestigungszustand erreicht wurde, möglich ist.

Bei einer weiteren bevorzugten Ausgestaltungsform des erfindungsgemäßen Verfahrens ist das Markiermittel derart gestaltet, dass es beim Erreichen des planmäßigen Befestigungszustands durch eine Farbänderung sichtbar wird. Insbesondere kann sich die Farbe durch eine chemische Reaktion ändern, so dass es nach der Farbänderung als Markiermittel dient. Beispielsweise kann sich bei einem Verbundanker, der mit einer Klebemasse in ein Bohrloch eingeklebt wird, die Klebemasse beim Aushärten farblich ändern, sodass sie im planmäßigen Befestigungszustand eine bestimmte Farbe annimmt und als Markiermittel wirkt.

Kennzeichnend für das erfindungsgemäße Verfahren ist, dass nach der planmäßigen Montage des Befestigungsmittels das Markiermittel und das Informationselement zeitgleich und gemeinsam mit dem Sensor erfasst werden. Vorzugsweise wird nach dem Erfassen ein Foto, auf dem das Markiermittel und das Informationselement gemeinsam zu sehen sind, zur Dokumentation erstellt und gespeichert. Dies hat den Vorteil, dass das Foto auch zu einem späteren Zeitpunkt auch nachträglich noch ausgelesen werden kann, und die eindeutige Zuordnung von Markiermittel und Informationselement auch dann noch gegeben ist.

Die Erfindung wird nachfolgend anhand von fünf in der Zeichnung dargestellten Ausführungsbeispielen näher erläutert.

Es zeigen:
- Figur 1: ein erstes Befestigungssystem vor, während und nach der Montage des Befestigungsmittels in den Schnittdarstellungen 1a) bis 1c) und in einer Draufsicht 1d);
- Figur 2: ein zweites Befestigungssystem vor und nach der Montage des Befestigungsmittels in den Schnittdarstellungen 2a) und 2b);
- Figur 3: ein drittes Befestigungssystem vor und nach der Montage des Befestigungsmittels in den Schnittdarstellungen 3a) und 3b);
- Figur 4: ein viertes Befestigungssystem vor und nach der Montage des Befestigungsmittels in den Schnittdarstellungen 4a) und 4b); und
- Figur 5: ein fünftes Befestigungssystem vor und nach der Montage des Befestigungsmittels in den perspektivischen Darstellungen 5a) und 5b).

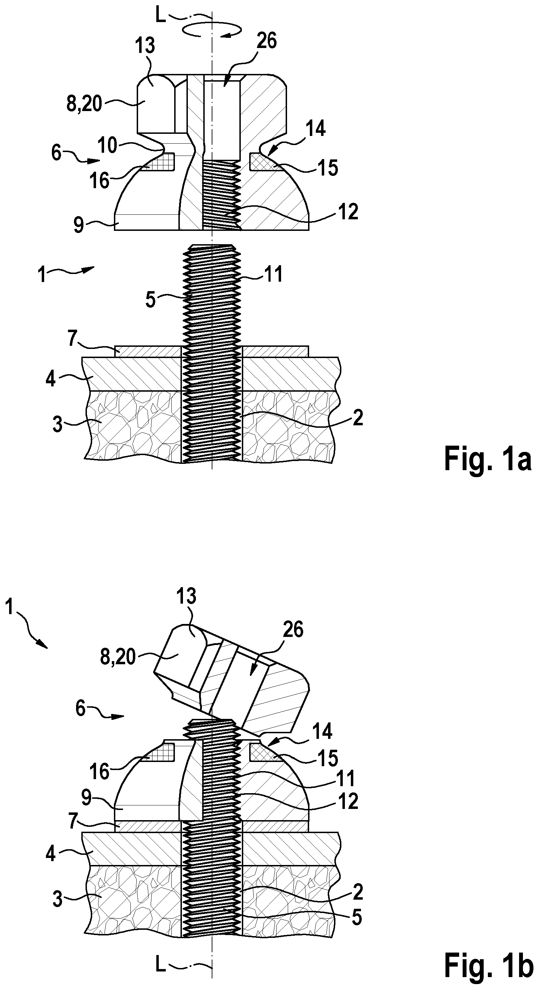

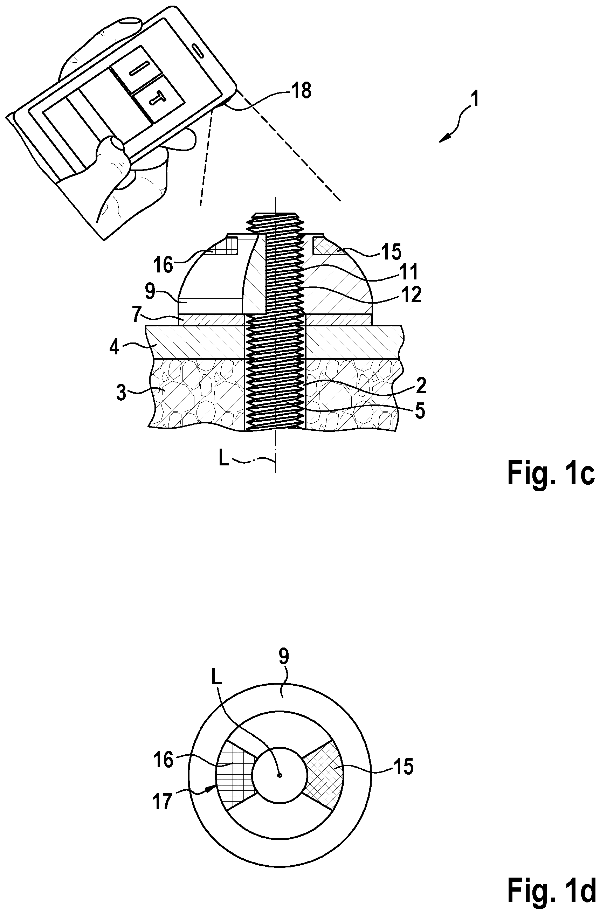

Das in den Abbildungen a) bis d) der Figur 1 dargestellte erste Befestigungssystem umfasst einen Anker als Befestigungsmittel 1, der in ein Bohrloch 2 in einem Verankerungsgrund 3 aus Beton eingebracht ist. Mit dem Befestigungsmittel 1 wird ein Anbauteil 4 am Verankerungsgrund 3 befestigt. Das Befestigungsmittel 1 ist in diesem Fall ein Spreizanker mit einem Ankerbolzen 5 mit einem Außengewinde 11, auf den eine Abreißmutter des Spreizankers als Abreißelement 6 aufgeschraubt wird, wodurch eine Unterlegscheibe 7 gegen das Anbauteil 4 gedrückt und somit das Anbauteil 4 gegen den Verankerungsgrund 3 verspannt wird (Figur 1b). Das Abreißelement 6 ist einstückig aus Stahl hergestellt, mit zwei Teilen 8, 9, die miteinander über eine Solltrennstelle 10 verbunden sind. Die beiden Teile 8, 9 weisen eine gemeinsame Durchgangsbohrung 26 auf, in der im zweiten Teil 9 ein Gewinde 12 angeordnet ist, in diesem Fall ein Innengewinde, das sich, wie die Durchgangsbohrung 26, entlang einer Achse L des Gewindes 12 erstreckt. Das Gewinde 12 korrespondiert zu einem Außengewinde 11 des Ankerbolzens 5, auf das das Abreißelement 6 zur Montage auf den Ankerbolzen 5 aufgeschraubt werden kann. Der dem Anbauteil 4 abgewandte erste Teil 8 des Abreißelements 6 ist mutternartig ausgebildet und weist an seinem Umfang Schlüsselflächen als Werkzeugsitz 13 auf, an dem ein nicht dargestelltes Drehwerkzeug, beispielsweise ein Schraubenschlüssel oder eine Nuss eines Schlagschraubers, zur Montage angesetzt werden kann. Der dem Anbauteil 4 zugewandte zweite Teil 9 des Abreißelements 6 weist eine glockenförmige Umfangsfläche mit kreisförmigem Querschnitt auf, die sich zur Solltrennstelle 10 hin im Durchmesser verjüngt. Die Solltrennstelle 10 ist als V-förmige, in Umfangsrichtung um die Achse L umlaufende Nut ausgebildet, die in radialer Richtung so tief verläuft, dass in einer Draufsicht auf das Abreißelement 6, auf die dem Anbauteil 4 abgewandte Seite und in Richtung der Achse L, der erste Teil 8 des Abreißelements 6 das zweite Teil 9 in einem kreisringförmigen Abdeckbereich 14 abdeckt. Das erste Teil 8 ist somit ein Abdeckelement 20 für den Abdeckbereich 14. Im Abdeckbereich 14 ist ein Markiermittel 15 sowie ein Informationselement 16 angeordnet. Das Informationselement 16 umfasst einen Code 17, hier in Form eines optoelektronisch lesbaren DM-Codes. Das Informationselement 16 und das Markiermittel 15 befinden sich bezüglich der Achse L des Gewindes 12 an sich gegenüberliegenden Stellen des Abdeckbereichs 14.

Der Code 17 enthält Informationen zur Identifikation des Befestigungsmittels 1: Beispielsweise enthält der Code 17 einen Link zu einer Homepage, auf der Informationen zum Befestigungsmittel 1 zur Verfügung gestellt werden. Der Code 17 kann zudem, oder alternativ, eineindeutig für das Befestigungsmittel 1 sein. "Eineindeutig" meint, dass der Code 17 nur ein einziges Mal in derselben Form für genau das Befestigungsmittel 1 verwendet wird. So ist beispielsweise im Code 17 eine eineindeutige Seriennummer zur Identifikation des einen Befestigungsmittels 1 enthalten.

Nach dem Ansetzen des als Abreißmutter ausgebildeten Abreißelements 6 am Außengewinde 11 des Ankerbolzens 5 (Figur 1a) wird das Abreißelement 6 auf das Außengewinde 11 aufgeschraubt. Dabei wird mit einem (nicht dargestellten) Drehwerkzeug ein Drehmoment über den Werkzeugsitz 13 auf das Abreißelement 6 aufgebracht und dieses vom ersten Teil 8 des Abreißelements 6 über die Solltrennstelle 10 auf das zweite Teil 9 des Abreißelements 6 übertragen, das das Gewinde 12 aufweist. Ist das Anbauteil 4 durch das Aufdrehen des Gewindes 12 des Abreißelements 6 auf das Außengewinde 11 des Ankerbolzens 5 planmäßig gegen den Verankerungsgrund 3 verspannt, so wird ein für diesen planmäßigen Befestigungszustand charakteristisches Installationsdrehmoment erreicht. Die Solltrennstelle 10 ist derart ausgelegt, dass sie beim Erreichen des Installationsdrehmoments nachgibt, sodass der erste Teil 8 des Abreißelements 6 vom aufgeschraubten zweiten Teil 9 abreißt und abgetrennt wird. Das Markiermittel 15 und das Informationselement 16 werden in diesem planmäßigen Befestigungszustand nun nicht mehr vom ersten Teil 8 abgedeckt. Entgegen dem ursprünglichen Ausgangszustand können das Markiermittel 15 und das Informationselement 16 nun gemeinsam, das heißt in einem Bild und zeitgleich von einem Sensor 18 erfasst werden (Figur 1c). Im Ausführungsbeispiel ist der Sensor 18 ein optoelektronischer Sensor, nämlich die Kamera eines Mobiltelefons. In Figur 1d) ist das Bild zu sehen, das der Sensor in diesem planmäßigen Befestigungszustand bei Draufsicht in Richtung der Achse L aufnehmen kann.

In einem Ausgangszustand, in dem der erste Teil 8 des Abreißelements 6 den Abdeckbereich 14 überdeckt, können das Markiermittel 15 und das Informationselement 16 dagegen nicht gemeinsam, das heißt zeitgleich und in einem Bild, erfasst werden. Der Sensor 18 kann im Ausgangszustand (Figur 1a) oder während der Montage das Informationselement 16 oder das Markiermittel 15 erfassen, aber nicht beide gemeinsam.

Das Markiermittel 15, beispielsweise eine farbige Markierung, enthält im Ausführungsbeispiel keinen Code oder eine zusätzliche Information. Das Markiermittel 15 ist ein Kontrollmittel zur Qualitätsprüfung der planmäßigen Befestigung. Erst wenn das Markiermittel 15 gemeinsam mit dem, im vorliegenden Fall eineindeutigen Informationselement 16 mit dem Sensor 18 erfasst werden kann, ist der Nachweis erbracht, dass das geforderte Qualitätsmerkmal, hier das Erreichen des erforderlichen Installationsdrehmoments, erreicht ist. Mit dem Sensor 18 kann dieses Qualitätsmerkmal dokumentiert werden, in dem das Markiermittel 15 und das Informationselement 16 mit der Kamera des Mobiltelefons gemeinsam erfasst und in einem Foto dokumentiert und dauerhaft gespeichert werden. Durch den eineindeutigen Code 17 ist die Zuordnung des Bilds zu dem jeweiligen Befestigungsmittel 1 dauerhaft gegeben. Der Code 17 ist auch auf dem Foto erkenn- und somit auslesbar.

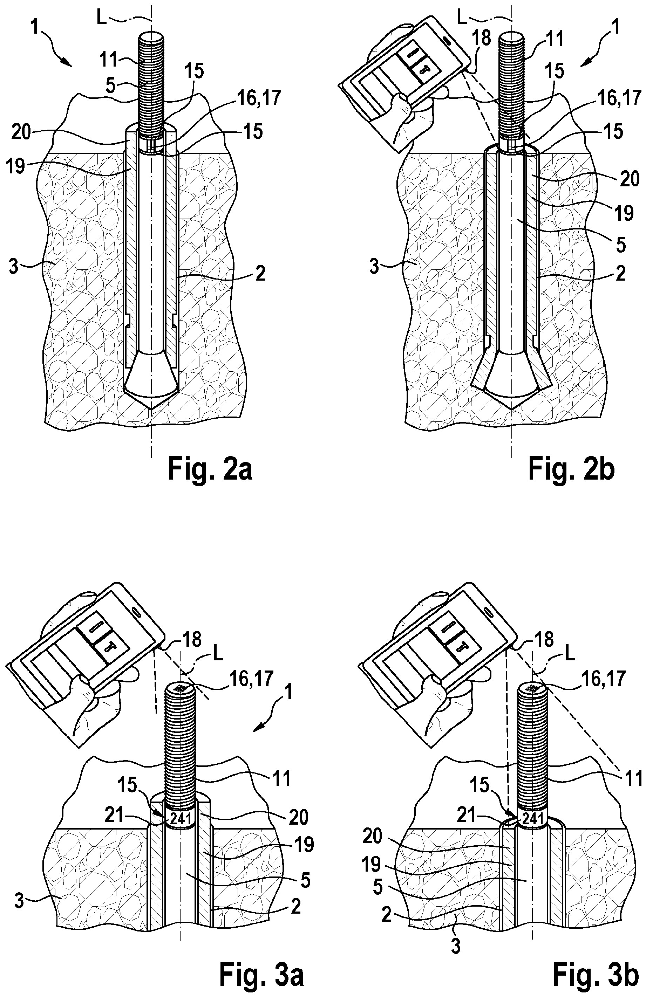

Die Figuren 2 bis 5 zeigen weitere Befestigungssysteme, die sich von dem ersten Befestigungssystem der Figur 1 insbesondere durch das verwendete Befestigungsmittel 1 unterscheiden. Um Wiederholungen zu vermeiden, wird nachfolgend nur auf die Unterschiede eingegangen. Der Übersichtlichkeit halber erhalten einander entsprechende Teile dieselben Bezugszeichen.

Die Figur 2 zeigt als alternatives Befestigungsmittel 1 einen selbstschneidenden Hinterschnittanker. Dieser umfasst einen Ankerbolzen 5 und eine Hülse 19. In einem unverspreizten Ausgangszustand (Figur 2a) verdeckt die Hülse 19 einen Code 17, hier ebenfalls ein Data-Matrix-Code, der am Ankerbolzen 5 axial zwischen zwei umlaufenden Ringen als Informationsmittel 16 angeordnet ist. Die beiden Ringe bilden das Markiermittel 15. Das hintere Ende der Hülse 19, die im unverspreizten Ausgangszustand über den Verankerungsgrund 3 übersteht, verdeckt den Code 17 und das Markiermittel 15 und hat somit die Funktion eines Abdeckelements 20. Informationselement 16 und Markiermittel 15 werden im Ausgangszustand von diesem Abdeckelement 20 vollständig abgedeckt, so dass sie mit dem Sensor 18 nicht erfassbar sind. Zum Überführen des Hinterschnittankers von diesem Ausgangszustand in einen planmäßigen Befestigungszustand, in dem der Hinterschnittanker als Befestigungsmittel 1 planmäßig in dem in diesem Fall dann hinterschnittenen Bohrloch 2 verankert ist (Figur 2b), wird die Hülse 19 in der für selbstschneidende Hinterschnittanker bekannten Weise mit einem nicht dargestellten Werkzeug in das Bohrloch 2 hineingeschlagen, wodurch ein Spreizbereich der Hülse 19 aufspreizt, den Hinterschnitt des Bohrlochs 2 erstellt und den Hinterschnittanker im Bohrloch 2 planmäßig verankert, was Figur 2b) zeigt. In diesem planmäßigen Befestigungszustand ist die Hülse 19 so weit in das Bohrloch 2 hinein verschoben, dass sie sowohl die beiden Ringe als Markiermittel 15, wie auch den Code 17 als Informationselement 16 nicht mehr überdeckt und somit beide, Markiermittel 15 und Informationselement 16, mit dem Sensor 18 erfasst und dokumentiert werden können. Alternativ ist es auch möglich, dass der Code 17 sowohl Informationselement 16 als auch Markiermittel 15 darstellt, die beiden Ringe somit weggelassen werden können. In diesem Fall wäre das Markiermittel 15 mit dem Informationselement 16 identisch. Unabhängig davon, ob die Ringe oder der Code 17 das Markiermittel 15 bilden, zeigt das Markiermittel 15 als Kontrollmittel zur Qualitätsprüfung an, dass die Hülse 19 ausreichend weit in das Bohrloch 2 hinein verschoben und somit aufgespreizt worden ist.

Das dritte Ausführungsbeispiel der Figur 3 entspricht dem zweiten Ausführungsbeispiel der Figur 2 mit dem Unterschied, dass zwischen den beiden Ringen des Markiermittels 15 eine Prüfziffer 21 statt des Codes 17 angeordnet ist. Die Prüfziffer bildet gemeinsam mit den Ringen das Markiermittel 15. Alternativ können auch in diesem Fall die beiden Ringe weggelassen werden, sodass nur die Prüfziffer 21 das Markiermittel 15 bildet. Die Prüfziffer 21 ist eine dreistellige Zahl, also ein mehrstelliges alphanumerisches Zeichen beziehungsweise ein alphanumerischer Code. Das Informationselement 16, auch ein DM-Code, ist an der hinteren Stirnfläche des Ankerbolzens 5 angeordnet. Somit kann das Informationselement 16 bereits im Ausgangszustand mit dem Sensor 18 erfasst werden, sodass ein Anwender beispielsweise das Informationselement 16 dazu verwenden kann, Informationen zur Montage des Befestigungsmittels 1 von einer durch Scannen des Codes 17 zugänglichen Website abzurufen. Dagegen ist nach der planmäßigen Montage des Hinterschnittankers sowohl das Markiermittel 15 als auch das Informationselement 16 erfassbar, was Figur 3b) zeigt. Die Prüfziffer 21 hat hier ebenfalls die Funktion eines Codes 17: Erst wenn die Prüfziffer 21 mit dem Sensor 18 vollständig als Zahl erfasst und ausgelesen werden kann, ist gewährleistet, dass der planmäßige Befestigungszustand erreicht ist. Ist die Prüfziffer 21 nicht auslesbar bedeutet dies, dass die Hülse 19 nicht weit genug verschoben wurde und der planmäßige Befestigungszustand noch nicht erreicht ist. Dabei kann der Code 17 eineindeutig für das Befestigungsmittel 1 sein. Der Code 17 beinhaltet dann Informationen zur Prüfziffer 21, die dem Befestigungsmittel 1 als eine definierte Zahl zugeordnet ist. Durch Scannen des DM-Codes mit dem Sensor 18 erhält der Anwender und/oder eine Verarbeitungssoftware die Prüfziffer 21 genannt, die dann mit der erfassten Prüfziffer 21 abgeglichen wird. Nach dem Erfassen der korrekten Prüfziffer 21 kann mit dem Sensor 18 ein Bild aufgenommen werden, auf dem der Code 17 und die Prüfziffer 21 gemeinsam abgebildet sind, so dass das Erreichen des planmäßigen Befestigungszustands dauerhaft und überprüfbar dokumentiert ist.

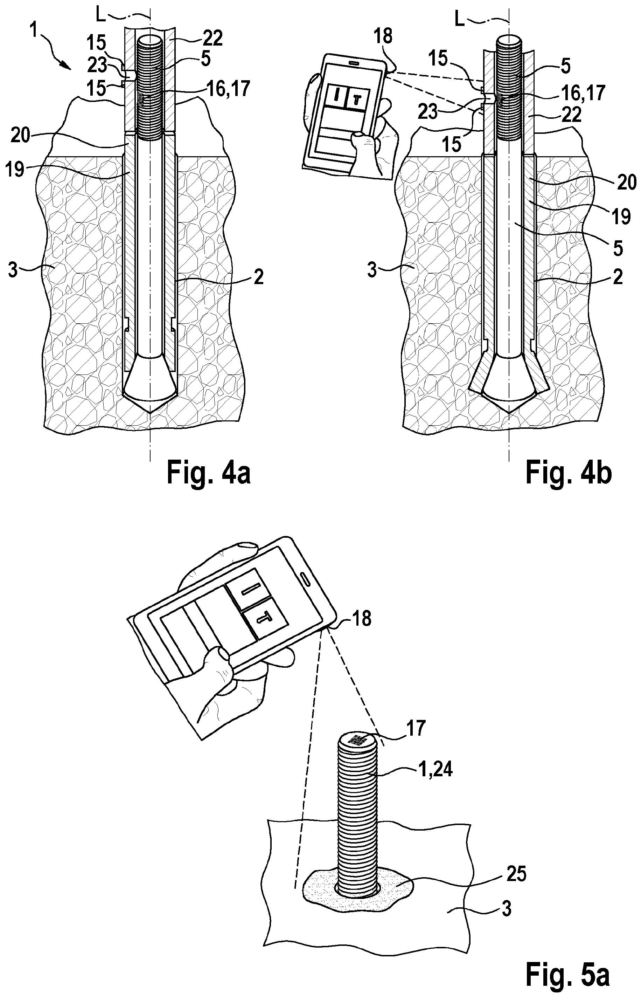

In Figur 4 ist eine Abwandlung des aus der Figur 2 bekannten zweiten Befestigungssystems dargestellt. Dieses vierte Befestigungssystem zeichnet sich durch ein Montagewerkzeug 22 aus. Das Montagewerkzeug 22 ist ein Hohlzylinder mit einer Öffnung 23, deren Ränder das Markiermittel 15 bilden beziehungsweise deren Ränder als Markiermittel 15 farbig oder auf andere Weise markiert sind. Zur Montage wird das Montagewerkzeug 22 auf den Ankerbolzen 5 aufgesetzt, sodass es an der Hülse 19 anliegt. Über das Montagewerkzeug 22 werden Schläge auf die Hülse 19 ausgeübt und die Hülse 19 dadurch in das Bohrloch 2 eingetrieben (Figur 4a). Nach dem Erreichen des planmäßigen Befestigungszustands (Figur 4b) ist das am Ankerbolzen 5 angeordnete Informationselement 16, hier ein DM-Code 17, durch die Öffnung 23 sichtbar. In diesem planmäßigen Befestigungszustand können somit das Markiermittel 15 und das Informationselement 16 gemeinsam mit dem Sensor 18 erfasst und das Erreichen des planmäßigen Befestigungszustands dokumentiert werden.

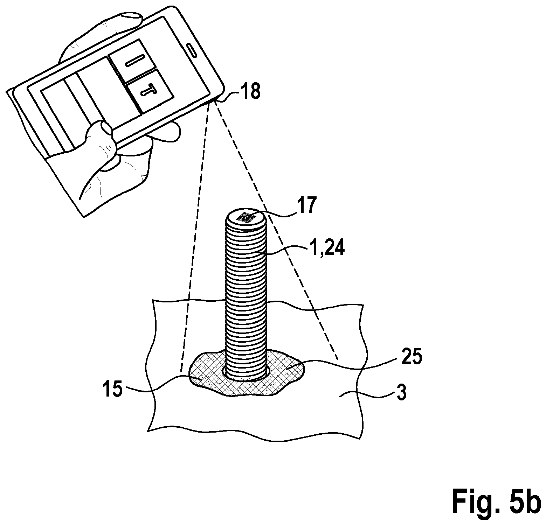

Figur 5 zeigt ein fünftes Ausführungsbeispiel des Befestigungssystems. Das Befestigungsmittel 1 ist hier eine Gewindestange 24, die mit einer aushärtenden Klebermasse 25 in das Bohrloch 2 in dem Verankerungsgrund 3 eingeklebt ist. An der äußeren Stirnseite der Gewindestange 24 ist ein Code 17, auch hier ein DM-Code, als Informationselement 16 angeordnet. Die Klebermasse 25 ändert erfindungsgemäß beim Aushärten ihre Farbe, so dass sie im planmäßigen Befestigungszustand, in dem sie ausgehärtet ist, eine bestimmte, vordefinierte Farbe aufweist und somit als Markiermittel 15 wirkt. Die Klebermasse 25 wird durch die Farbänderung zum Markiermittel 15, das heißt, das Markiermittel 15 wird erst durch Farbänderung sichtbar. Der Sensor 18 und/oder das zugehörige Auswertprogramm ist derart eingestellt, dass er/es die Klebermasse 25 erst dann als Markiermittel 15 akzeptiert und erfasst, wenn es die vordefinierte Farbe angenommen hat (Figur 5b). Davor ist die gemeinsame Erfassung von Informationselement 16 und Markiermittel 15 systembedingt nicht möglich.

Mit den beschriebenen Befestigungssystemen kann das Erreichen eines planmäßigen Befestigungszustands eindeutig erfasst und dokumentiert werden. Eine fehlerhafte Dokumentation durch die Erfassung von Markiermittel 15 und Informationselement 16 im Ausgangszustand oder während der Montage ist erfindungsgemäß ausgeschlossen.

### Bezugszeichenliste

### Befestigungssystem, Verfahren zum Befestigen eines Befestigungsmittels sowie Befestigungsmittel

- 1: Befestigungsmittel
- 2: Bohrloch
- 3: Verankerungsgrund
- 4: Anbauteil
- 5: Ankerbolzen
- 6: Abreißelement
- 7: Unterlegscheibe
- 8: erster Teil des Abreißelements 6
- 9: zweiter Teil des Abreißelements 6
- 10: Solltrennstelle
- 11: Außengewinde
- 12: Gewinde
- 13: Werkzeugsitz
- 14: Abdeckbereich
- 15: Markiermittel
- 16: Informationselement
- 17: Code
- 18: Sensor
- 19: Hülse
- 20: Abdeckelement
- 21: Prüfziffer
- 22: Montagewerkzeug
- 23: Öffnung
- 24: Gewindestange
- 25: Klebermasse
- 26: Durchgangsbohrung
- L: Achse des Gewindes 12

## Patentansprüche

1. Verfahren zum planmäßigen Befestigen eines Ankers als Befestigungsmittel (1) in einem Bohrloch (2) unter Verwendung eines Befestigungssystems,
wobei das Befestigungssystem das Befestigungsmittel (1) und einen vom Befestigungsmittel (1) separaten Sensor (18) umfasst,
wobei das Befestigungsmittel (1) bei einer Montage von einem Ausgangszustand in einen planmäßigen Befestigungszustand überführbar ist,
wobei das Befestigungssystem mindestens ein Markiermittel (15) und mindestens ein maschinenlesbares Informationselement (16) umfasst,
wobei das Markiermittel (15) und das Informationselement (16) derart angeordnet sind, dass sie im planmäßigen Befestigungszustand, aber nicht vor und/oder während der Montage, gemeinsam mit dem Sensor (18) zum Nachweis der planmäßigen Befestigung erfassbar sind,
**dadurch gekennzeichnet, dass** nach der planmäßigen Montage des Befestigungsmittels (1) im planmäßigen Befestigungszustand das Markiermittel (15) und das Informationselement (16) zeitgleich und gemeinsam mit dem Sensor (18) erfasst werden.

2. Verfahren nach Anspruch 1, **dadurch gekennzeichnet, dass** zumindest das Informationselement (16) einen optoelektronisch auslesbaren Code (17) zur Identifikation des Befestigungsmittels (1) umfasst oder ein derartiger Code (17) ist.

3. Verfahren nach einem der vorstehenden Ansprüche, **dadurch gekennzeichnet, dass** das Informationselement (16) und das Markiermittel (15) identisch und als ein Element ausgebildet sind.

4. Verfahren nach einem der vorstehenden Ansprüche, **dadurch gekennzeichnet, dass** das Informationselement (16) oder das Markiermittel (15) bereits im Ausgangszustand mit dem Sensor (18) erfassbar ist.

5. Verfahren nach einem der vorstehenden Ansprüche, **dadurch gekennzeichnet, dass** das Markiermittel (15) ein Kontrollmittel zur Qualitätsprüfung der planmäßigen Befestigung des Befestigungsmittels (1) ist.

6. Verfahren nach einem der vorstehenden Ansprüche, **dadurch gekennzeichnet, dass** das Befestigungsmittel (1) ein Abdeckelement (20) aufweist, das derart gestaltet ist, dass es vor und/oder während der Montage zumindest das Informationselement (16) oder das Markiermittel (15) derart abdeckt, dass sie nicht gemeinsam erfassbar sind, und dass das Abdeckelement (20) das Informationselement (16) und/oder das Markiermittel (15) beim Erreichen des Endzustands zum gemeinsamen Erfassen von Informationselement (16) und Markiermittel (15) mittels des Sensors (18) freigibt, insbesondere durch Verschieben, Verformen oder Abreißen des Abdeckelements (20) während der Montage.

7. Verfahren nach einem der vorstehenden Ansprüche, **dadurch gekennzeichnet, dass** das Befestigungssystem ein Abreißelement (6) umfasst, das aus zwei Teilen (8, 9) besteht, die mittels einer Solltrennstelle (10) verbunden sind, und dass das Informationselement (16) und das Markiermittel (15) gemeinsam an einem der beiden Teile (8, 9) angeordnet sind, insbesondere an sich bezüglich einer Achse (L) eines Gewindes (12) des Abreißelements (6) gegenüberliegenden Stellen.

8. Verfahren nach einem der vorstehenden Ansprüche, **dadurch gekennzeichnet, dass** das Befestigungssystem einen Spreizanker mit einem Ankerbolzen (5) und einer Hülse (19) umfasst, wobei zumindest das Informationselement (16) oder das Markiermittel (15) am Ankerbolzen (5) angeordnet ist.

9. Verfahren nach Anspruch 8, **dadurch gekennzeichnet, dass** das Markiermittel (15) an einem Montagewerkzeug (22) zur planmäßigen Montage des Befestigungsmittels (1) angeordnet ist.

10. Verfahren nach einem der vorstehenden Ansprüche, **dadurch gekennzeichnet, dass** das Markiermittel (15) mindestens ein alphanummerisches Zeichen umfasst.

11. Verfahren nach Anspruch 10, **dadurch gekennzeichnet, dass** das Markiermittel (15) ein mehrstelliger alphanummerischer Code, insbesondere eine Prüfziffer (21) ist.

12. Verfahren nach einem der vorstehenden Ansprüche, **dadurch gekennzeichnet, dass** das Informationselement (16) eineindeutig für das Befestigungsmittel (1) ist.

13. Verfahren nach einem der vorstehenden Ansprüche, **dadurch gekennzeichnet, dass** ein Markiermittel (15) derart gestaltet ist, dass es beim Erreichen des planmäßigen Befestigungszustands durch Farbänderung sichtbar wird.

## Claims

1. Procedure for the planned fastening of an anchor as a fastening means (1) in a drill hole (2) using a fastening system,
wherein the fastening system comprises the fastening means (1) and a sensor (18) separate from the fastening means (1),
wherein the fastening means (1) can be converted from an initial state to a planned fastening state during installation,
wherein the fastening system comprises at least one marking means (15) and at least one machine-readable information element (16),
wherein the marking means (15) and the information element (16) are arranged in such a way that they can be detected together with the sensor (18) in the planned fastening state, but not before and/or during installation, in order to verify the planned fastening,
**characterised in that** after the planned installation of the fastening means (1) in the planned fastening state, the marking means (15) and the information element (16) are detected simultaneously and together with the sensor (18).

2. A method according to claim 1, **characterised in that** at least the information element (16) comprises an optoelectronically readable code (17) for identifying the fastening means (1) or is such a code (17).

3. A method according to one of the preceding claims, **characterised in that** the information element (16) and the marking means (15) are identical and formed as a single element.

4. A method according to one of the preceding claims, **characterised in that** the information element (16) or the marking means (15) can already be detected by the sensor (18) in the initial state.

5. A method according to one of the preceding claims, **characterised in that** the marking means (15) is a control means for checking the quality of the planned attachment of the fastening means (1).

6. A method according to one of the preceding claims, **characterised in that** the fastening means (1) has a cover element (20) which is designed in such a way that, before and/or during installation, it covers at least the information element (16) or the marking means (15) in such a way that they cannot be grasped together, and **in that** the cover element (20) releases the information element (16) and/or the marking means (15) when the final state for jointly detecting the information element (16) and marking means (15) by means of the sensor (18) is reached, in particular by displacing, deforming or tearing off the cover element (20) during installation.

7. A method according to one of the preceding claims, **characterised in that** the fastening system comprises a breakaway element (6) consisting of two parts (8, 9) connected by a designed-to-break point (10), and **in that** the information element (16) and the marking means (15) are arranged together on one of the two parts (8, 9), in particular at locations opposite one another with respect to an axis (L) of a thread (12) of the breakaway element (6).

8. A method according to one of the preceding claims, **characterised in that** the fastening system comprises an expansion anchor with an anchor bolt (5) and a sleeve (19), wherein at least one of the information element (16) and the marking means (15) is arranged on the anchor bolt (5).

9. A method according to claim 8, **characterised in that** the marking means (15) is arranged on an assembly tool (22) for planned assembly of the fastening means (1).

10. A method according to one of the preceding claims, **characterised in that** the marking means (15) comprises at least one alphanumeric character.

11. A method according to claim 10, **characterised in that** the marking means (15) is a multi-digit alphanumeric code, in particular a check digit (21).

12. A method according to one of the preceding claims, **characterised in that** the information element (16) is one-to-one for the fastening means (1).

13. A method according to one of the preceding claims, **characterised in that** a marking means (15) is designed in such a way that it becomes visible by changing colour when the planned state of fastening is reached.

## Revendications

1. Procédé pour la fixation systématique d'un ancrage comme moyen de fixation (1) dans un trou de forage (2) en utilisant un système de fixation,
le système de fixation comprenant le moyen de fixation (1) et un capteur (18) séparé du moyen de fixation (1),
le moyen de fixation (1) pouvant être transféré d'un état initial à un état de fixation systématique lors d'un montage,
le système de fixation comprenant au moins un moyen de marquage (15) et au moins un élément d'information (16) lisible par une machine,
le moyen de marquage (15) et l'élément d'information (16) étant disposés de telle sorte qu'ils peuvent être détectés dans l'état de fixation systématique, mais pas avant et/ou pendant le montage, conjointement avec le capteur (18) pour prouver la fixation systématique,
**caractérisé en ce qu'**après le montage systématique du moyen de fixation (1), dans l'état de fixation systématique, le moyen de marquage (15) et l'élément d'information (16) sont détectés simultanément et conjointement avec le capteur (18).

2. Procédé selon la revendication 1, **caractérisé en ce qu'**au moins l'élément d'information (16) comprend un code (17) lisible par voie optoélectronique pour l'identification du moyen de fixation (1) ou est un tel code (17).

3. Procédé selon l'une des revendications précédentes, **caractérisé en ce que** l'élément d'information (16) et le moyen de marquage (15) sont identiques et formés comme un seul élément.

4. Procédé selon l'une des revendications précédentes, **caractérisé en ce que** l'élément d'information (16) ou le moyen de marquage (15) peut être détecté par le capteur (18) dès l'état initial.

5. Procédé selon l'une des revendications précédentes, **caractérisé en ce que** le moyen de marquage (15) est un moyen de contrôle de la qualité de la fixation systématique du moyen de fixation (1).

6. Procédé selon l'une des revendications précédentes, **caractérisé en ce que** le moyen de fixation (1) présente un élément de recouvrement (20) qui est conçu de telle sorte qu'il recouvre au moins l'élément d'information (16) ou le moyen de marquage (15) avant et/ou pendant le montage de telle sorte qu'ils ne puissent pas être détectés ensemble, et **en ce que** l'élément de recouvrement (20) libère l'élément d'information (16) et/ou le moyen de marquage (15) lorsque l'état final est atteint pour la détection commune de l'élément d'information (16) et du moyen de marquage (15) au moyen du capteur (18), notamment en déplaçant, déformant ou arrachant l'élément de recouvrement (20) pendant le montage.

7. Procédé selon l'une quelconque des revendications précédentes, **caractérisé en ce que** le système de fixation comprend un élément d'arrachage (6) constitué de deux parties (8, 9) reliées par un point de rupture (10), et **en ce que** l'élément d'information (16) et le moyen de marquage (15) sont disposés conjointement sur l'une des deux parties (8, 9), notamment en des points opposés par rapport à un axe (L) d'un filetage (12) de l'élément d'arrachage (6).

8. Procédé selon l'une des revendications précédentes, **caractérisé en ce que** le système de fixation comprend un ancrage à expansion avec un boulon d'ancrage (5) et une douille (19), au moins l'élément d'information (16) ou le moyen de marquage (15) étant disposé sur le boulon d'ancrage (5).

9. Procédé selon la revendication 8, **caractérisé en ce que** le moyen de marquage (15) est disposé sur un outil de montage (22) pour le montage systématique du moyen de fixation (1).

10. Procédé selon l'une des revendications précédentes, **caractérisé en ce que** le moyen de marquage (15) comprend au moins un caractère alphanumérique.

11. Procédé selon la revendication 10, **caractérisé en ce que** le moyen de marquage (15) est un code alphanumérique à plusieurs chiffres, en particulier un chiffre de contrôle (21).

12. Procédé selon l'une des revendications précédentes, **caractérisé en ce que** l'élément d'information (16) est unique pour le moyen de fixation (1).

13. Procédé selon l'une des revendications précédentes, **caractérisé en ce qu'**un moyen de marquage (15) est configuré de manière à être visible par changement de couleur lorsque l'état de fixation systématique est atteint.
